Europäisches Patentamt

European Patent Office

Office européen des brevets

(19)

(11) **EP 0 542 153 B1**

(12) **EUROPEAN PATENT SPECIFICATION**

(45) Date of publication and mention
of the grant of the patent:
**01.04.1998 Bulletin 1998/14**

(51) Int Cl.6: **H04N 5/14**

(21) Application number: **92119056.7**

(22) Date of filing: **06.11.1992**

(54) **Method for the search of motion vectors for a video signal**

Verfahren zur Suche von Bewegungsvektoren für ein Videosignal

Méthode de recherche de vecteurs de mouvement pour un signal vidéo

(84) Designated Contracting States:
**DE ES FR GB IT NL SE**

(30) Priority: **11.11.1991 FI 915307**

(43) Date of publication of application:
**19.05.1993 Bulletin 1993/20**

(73) Proprietor: **OY NOKIA AB**
**00130 Helsinki (FI)**

(72) Inventors:
• **Juhola, Janne**
  **SF-33720 Tampere (FI)**
• **Lunden, Vesa**
  **SF-33720 Tampere (FI)**
• **Rissanen, Kari**
  **SF-33720 Tampere (FI)**

(74) Representative: **Schroeter, Helmut et al**
**Postfach 71 03 50**
**81453 München (DE)**

(56) References cited:
**JP-A- 3 217 184          US-A- 5 021 881**

## Description

The invention relates to a method for the search of motion vectors for a video signal to make use of motion vectors in video signal processing applications, such as video signal compression. In the method, an error value is calculated for at least part of the image blocks on the basis of each motion vector candidate to be used, and the motion vector candidate producing the smallest error value in each particular case is selected as the motion vector of the image block.

There are more and more video signal processing applications that require information about the motion contained in the image. Examples of such applications are video signal compression methods employing motion compensation and motion-compensated line frequency or sampling raster transforms. Each image is usually divided into smaller blocks each having an associated motion vector. This vector indicates the direction and speed of the motion of the image information contained in the block.

Typically, to find motion vectors for an image, a so-called block matching method is used, in which each block of a current image is compared with the blocks of a reference image within a certain search area. From among the reference blocks, that minimizing the applied error criterion (typically the Mean Absolute Error MAE, or the Mean Square Error MSE) is selected. The difference between the positions of the current block and the selected reference block gives a motion vector for the block.

JP-A-3217184 discloses a motion vector estimating apparatus employing the block matching method for providing block matching values which represent likelihoods of motion vectors with respect to an actual motion. The block matching values are weighted by respective convolution adders. The smallest of the output values from the convolution adders is selected and outputted as a final motion vector.

Compression applications employing motion compensation require the transmission of the motion vector of each block in conjunction with the actual coded image. Typically, the motion vector of each block is not transmitted as such but only the difference between the motion vector of the current block and that of the previous block is transmitted, that is, the motion vector of the previous block is used as a predictor for the motion vector of the current block. Before transmission, these differences are further VLC (Variable Length Coding) coded so that the shortest code words correspond to the most frequent differences. In view of the coding of the motion vectors, it is advantageous if the differences between consecutive vectors are as small as possible so that the number of bits required for the transmission is also low.

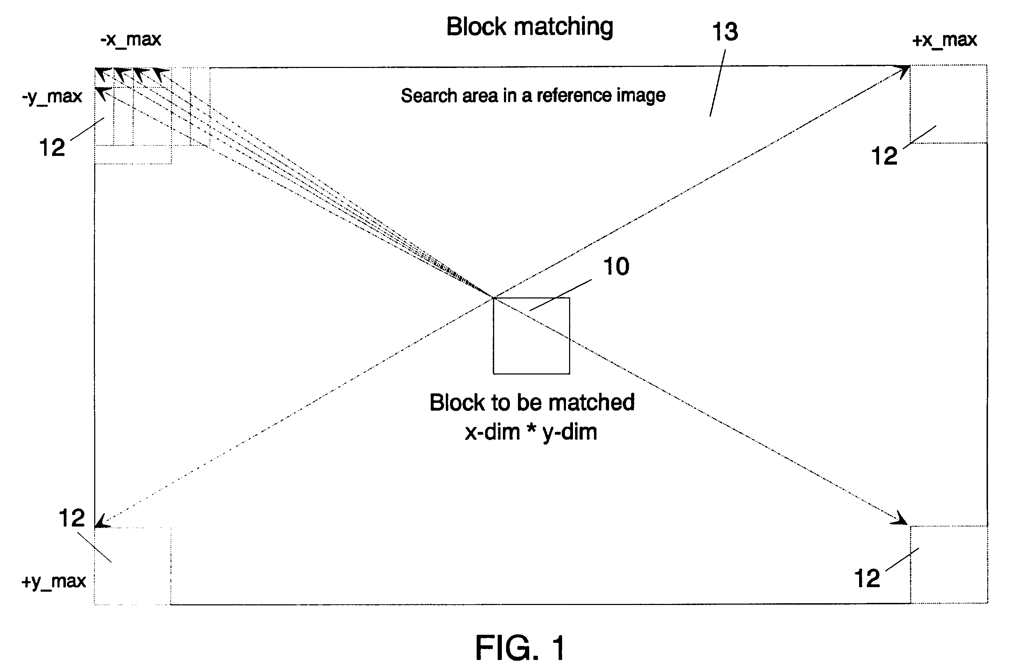

The search for the motion vectors will be described more closely below with reference to the attached Figure 1.

The blocks for which motion vectors are to be found are typically small in size, e.g. 16 * 16 pixels. In normal image information, an image portion having substantially the size of one block very rarely moves in a direction different from the direction of the neighbouring blocks. In other words, individual divergent motion vectors are mostly due to errors committed by the vector search method. Accordingly, a more homogeneous vector field usually corresponds more closely to the motion actually taking place in the image.

Motion vectors may be used as a selection criterion for the subsequent processing of the image in coding, for instance. Motion-adaptive or motion-compensated pre- or postprocessing may be performed on the image, and the motion vectors found for the image can be used to facilitate the choice of the way of processing, e.g. to decide whether the block is processed as two separate fields (assuming there is motion present in the block) or whether the fields are combined into a single image (thus obtaining better results in stationary image areas). It is thereby usually preferable that the vectors are as short as possible and that there does not occur any sudden deviations in the vector directions.

In most coding applications, motion vectors are used to find a predictor for the image to be coded from among the previously transmitted images, in addition to which the formed prediction error is transmitted. Therefore incorrect motion information is not visible in the image as individual errors but deteriorates the image quality indirectly over the entire image area.

On the contrary, in motion-compensated line frequency transforms and in motion-adaptive noise removal, the effect of incorrect motion information becomes directly visible in the image as clear errors or as an inferior quality of a desired function. Therefore it is of primary importance in such applications to obtain correct information about the motion taking place in the blocks.

As appears from the above, the applications would often provide better results if the motion vector field associated with the image were as homogeneous as possible without any individual divergent vectors and if the vectors were as short as possible.

The object of the present invention is to provide a vector field more homogeneous than a vector field obtained by the conventional motion vector search methods so that the above-described problems are alleviated. This is achieved, according to claim 1, by means of a method for the search of motion vectors for a video signal to make use of motion vectors in video signal processing applications, such as video signal compression, said method comprising the steps of: calculating error values representing error between a current image block in a current image and reference image blocks selected on the basis of each of motion vector candidates of the current image block, weighting the calculated error values by respective weighting values, selecting the one of the motion vector candidates resulting in the lowest one of the weighted error value as the motion vector for the current image block. The method is characterized by the further step of determining each of the weighting values on the basis of the respective motion vector candidate and/or a ratio between the respective motion vector candidate and motion vectors, if any, previously selected from its neighbourhood for obtaining a more homogeneous motion vector field.

The basic idea of the invention is that the motion vectors of image blocks located in the neighbourhood of the image block are also allowed to affect the selection of the final motion vector of the image block in such a way that the advantage to be obtained from the homogenization of the motion vector field is greater than the disadvantage caused by a possible increase in the matching error value.

In the following the invention and its preferred embodiments will be described in greater detail with reference to the examples of the attached drawings, wherein

Figure 1 illustrates the search of motion vectors by a block matching method known *per se;* and
Figure 2 is a block diagram illustrating an equipment implementing the method according to the invention.

Figure 1 illustrates the search of a motion vector by a block matching method known *per se.* A block 10 to be compensated is compared with blocks 12 of equal size within a search area 13 in a reference image. The size of the search area 13 as full pixels is determined in accordance with the terms x_max and y_max. A matching error is calculated between the blocks 10 and 12 according to the applied error criterion. The vector is then changed by one pixel, and an error value is calculated for the block corto the vector. The error value is compared with the previous value, and the vector having the smaller error value is selected as a current motion vector candidate. The search is continued over the entire search area 13, and so the final motion vector of the image block 10 will be the vector having the smallest error value within the search area.

As the comparison of the blocks is a heavy operation, methods have been developed in an attempt to test only part of the motion vector candidates. This can be accomplished e.g. by testing a few vectors of different directions and then performing the search more thoroughly around the vector which gave the best result.

The search of the motion vector may also be performed with an accuracy greater than one full pixel. This is done by making the sampling raster of the reference image 13 more dense by interpolating new pixels between the original pixels. In this way, the search of the motion vector can be performed with a desired accuracy.

It is also possible to perform the search for the motion vectors by first applying a transform (such as the Fourier transform) to the image and then searching for correlation peaks in the transform domain. Typically, such methods produce a number of motion vector candidates, from among which the best is selected by block matching with a desired selection criterion.

However, motion vectors derived by the above-described block matching method cause problems, which will be described below.

In the block matching method, the search of a motion vector is carried out completely independently for each block, that is, the vectors of the other blocks do not affect the search in any way. Even though the desired error criterion can be minimized by this method, the method does not contribute to the formation of a homogeneous vector field in any way.

Noise present in the image causes problems in stationary image areas of uniform image information. Several blocks in different portions of the search area give an almost equally small matching error value, and even if there were no real motion present in the image, the noise may cause a fully erroneous, even long vector pointing in an arbitrary direction to be found for it.

The MAE and MSE error criteria used frequently in block matching have been selected mainly because they do not require any complicated calculation operations. Even with these simple error criteria, the block matching is such a heavy operation that IC circuits performing the block matching at video rates have been commercially available only for a few recent years.

For example, in the hybrid Discrete Cosine Transform (DCT) coding (a combination of a spatial DCT and a temporal DPCM coding), which is today used widely, a prediction block taken from the reference image from a position indicated by the motion vector of the block to be coded is subtracted from the block to be coded. The DCT transform is applied to the difference image so obtained, and the obtained DCT coefficients are quantized and VLC coded. The number of the obtained DCT coefficients and thus also the coding efficiency depend on the difference image to be transformed and thus also on the used motion vectors. The MAE and MSE error criteria do not at all minimize the number of bits formed in the DCT transform or the formed final error in view of the human eye.

As mentioned above, the method according to the present invention aims at achieving a vector field more homogeneous than a vector field obtained by the conventional methods so that the vectors of the neighbouring blocks also affect the selection of the final motion vector of the block. At the same time one aims at favouring the shortest possible vectors.

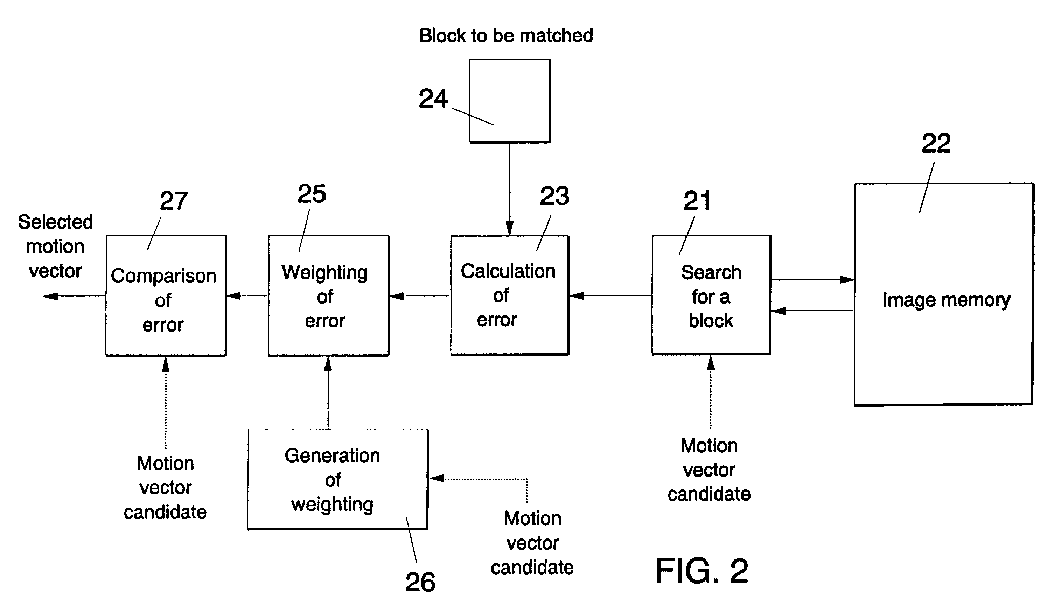

The method will be described in the following with reference to Figure 2. A motion vector candidate to be tested is applied to a block search unit 21, which searches an image stored in an image memory 22 for a block corresponding to the vector, and the block is then compared with an image block 24 to be matched in an error calculation unit 23. The operation performed in the error calculation unit 23 calculates an error between the block indicated by the vector and the block 24 to be matched by a desired method (e.g. MEA or MSE), and then forwards the error information. In the method according to the invention, the error is weighted in an error weighting unit 25. The error is corrected by a mathematical operation, e.g. multiplication, by means of a value generated by a weighting generator 26. The final error value is applied to a comparator 27, in which the error is compared with the smallest previous error and the vector giving the smallest error is finally selected as the motion vector of the block to be matched, and the resulting vector is forwarded.

The weighting generator 26 generates an appropriate weighting value for each vector, depending on the length of the vector and the relationship of the vector to the vectors selected from the neighbourhood. The weighting value is thus such that it increases or decreases the error value associated with the vector in a desired direction. In applications where the motion vectors are transmitted by the DPCM technique by transmitting only the change of the vector in relation to the previous vector, a vector identical to the previous selected vector is given a high weighting value. This vector can thereby be accepted, even though the error value calculated for it exceeds slightly that of some other vector.

In many applications it is important to know whether there is motion present in the image. A zero vector (the block of the image memory 22 having accurately the same position as the block 24) indicates that the image is stationary, and this information may be used in many image processing methods. The amount of misinterpretations caused by noise can be reduced substantially by giving the zero vector a weighting value which reduces the error value associated with the zero vector.

In addition, various applications employing motion vectors may benefit if the vectors are confined in a certain area. Such an area may be provided with its own weighting, which is possibly combined with the previous weightings.

A weighting value may also be used to favour vectors occurring either in a spatial or temporal neighbourhood, possibly in combination with other ways of weighting.

The method according to the invention may also be realized as post-processing of an existing vector field. This will be described below.

At the first stage, a motion vector minimizing the applied error criterion has been derived normally for all image blocks by using the entire search area. A finished vector field has thus been obtained. At the second stage, error values are recalculated for each block by using both the motion vector originally derived for the block and the motion vectors selected for the neighbouring blocks. As the number of cases to be tested is not high, the calculation of the error value may employ a more complicated error criterion than the testing of the entire search area. For example, the MAE criterion may be used in place of the MSE criterion.

The obtained error values are weighted by a weighting value generated by a generator corresponding to the weighting generator 26, and the vector producing the smallest final weighted error is selected as the motion vector. The length of the vector and its effect on the homogeneity of the final vector field affect the weighting value given to the vector even in this case.

Accordingly, no new motion vectors are derived at the second stage, but the motion vector of the current block may be replaced by the vector of a neighbouring block if the advantage to be obtained from the homogenization of the vector field and the shorter vectors is greater than the disadvantage caused by the greater matching error.

A simple situation where the motion vectors of only the current block and the block immediately preceding it are examined is discussed as an example of the above. Assume that $V_c$ is the vector of the current block and $V_p$ is the vector of the previous block, resulting from the first stage of the vector search. Assume further that $E_c$ is the matching error produced by the vector of the current block, and $E_p$ is the error produced by the vector of the previous block according to the MAE criterion. In this example, the same error criterion is applied at the first and the second stage of the search, so that $E_c$ and $E_p$ are also used in the selection of the final vector. The selection of the final vector may be done e.g. in the following way:

$$V_p \text{ long, } V_c \text{ short} \rightarrow \text{the final vector is } V_c$$

$$V_p \text{ long, } V_c \text{ long, } E_p < k{*}E_c \rightarrow \text{the final vector is } V_p$$

$$V_p \text{ short, } V_c \text{ short, } E_p < k{*}E_c \rightarrow \text{the final vector is } V_p$$

$$V_p \text{ short, } V_c \text{ long, } E_p < k{*}l{*}E_c \rightarrow \text{the final vector is } V_p$$

In the example, the vector lengths are divided roughly into two main classes only: long and short vectors. The value of the coefficients k and l is greater than one. In the example, one thus aims at using the vector of the previous block whenever it is not too long and whenever the matching error produced by it is not too much greater than the matching error produced by the vector of the current block.

The method according to the invention may be utilized in all types of motion vector searching methods. First, it can be used in a normal way to accomplish a so-called full search covering the entire search area. Second, it can be applied when using various accelerated search algorithms, in which the entire search area is not tested, but only the most promising portions of the search area are tested by various approximations. Similarly, it can be utilized efficiently in the search of motion vectors with an accuracy greater than one full pixel.

Even though the invention has been described above with reference to the example of the attached drawings, it is obvious that the invention is not restricted to it, but it may be modified in various ways within the inventive idea disclosed in the attached claims. The search of the motion vectors may take place e.g. by means of several increasingly accurate searches, in which one attempts to increase the accuracy of the vector by iterations. It is also possible to search for the motion vector candidates e.g. by a method based on the phase correlation. Even though the above description refers only to a method in which an error value is calculated on the basis of each motion vector candidate to be used for at least part of the image blocks, and the motion vector candidate producing the smallest error value is selected as the motion vector of the image block, it is also possible to calculate correlation values in place of the error value, and to select the vector associated with the highest correlation value as the motion vector. As the method according to the invention is equally applicable in such a reverse basic situation, the wording of the attached claims has to be understood to cover even this kind of variations.

**Claims**

1. A method for the search of motion vectors for a video signal to make use of motions vectors in video signal processing applications, such as video signal compression, said method comprising steps of

   calculating (23) error values representing error between a current image block (10,24) in a current image and reference image blocks selected on the basis of each of motion vector candidates of the current image block, weighting (25) the calculated error values by respective weighting values, selecting (27) the one of the motion vector candidates resulting in the lowest one of the weighted error value as the motion vector for the current image block (10,24), **characterized** by further steps of determining (26) each of the weighting values on the basis of the respective motion vector candidate and/or a ratio between the respective motion vector candidate and motion vectors, if any, previously selected from its neighbourhood for obtaining a more homogeneous motion vector field.

2. A method according to claim 1, **characterized** in that in the selection of a new vector the weighting value favours the vector selected last.

3. A method according to claim 1 or 2, **characterized** in that the weighting value favours a zero vector in relation to other vectors.

4. A method according to claim 1, 2 or 3, **characterized** in that the weighting value favours the vectors according to their length.

5. A method according to any of claims 1 to 4, **characterized** in that the weighting value favours vectors located within a certain area.

6. A method according to any of claims 1 to 5, **characterized** in that the weighting value favours vectors occurring in a spatial neighbourhood.

7. A method according to any of claims 1 to 6, **characterized** in that the weighting value favours vectors occurring in a temporal neighbourhood.

**Patentansprüche**

1. Verfahren zur Suche von Bewegungsvektoren für ein Videosignal, um Gebrauch von Bewegungsvektoren in Videosignalverarbeitungsanwendungen zu machen, wie beispielsweise einer Videosignalkompression, wobei das Verfahren die folgenden Schritte umfaßt:

   Berechnen (23) von Fehlerwerten, die einen Fehler zwischen einem aktuellen Bildblock (10, 24) in einem aktuellen Bild und Referenzbildblöcken repräsentieren, die auf der Basis jedes Bewegungsvektorkandidaten des aktuellen Bildblocks ausgewählt werden; Gewichten (25) der berechneten Fehlerwerte durch entsprechende Gewichtungswerte; Auswählen (27) des einen der Bewegungsvektorkandidaten, der in dem niedrigsten der gewichteten Fehlerwerte resultiert, als den Bewegungsvektor für den aktuellen Bildblock (10, 24);

   **gekennzeichnet durch** den folgenden weiteren Schritt: Bestimmen (26) eines jeden der Gewichtungswerte auf der Basis des entsprechenden Bewegungsvektorkandidaten und/oder eines Verhältnisses zwischen dem entsprechenden Bewegungsvektorkandidaten und Bewegungsvektoren, falls solche vorhanden sind, die zuvor aus seiner Nachbarschaft ausgewählt wurden, um ein homogeneres Bewegungsvektorfeld zu erhalten.

2. Verfahren nach Anspruch 1, **dadurch gekennzeichnet**, daß bei der Auswahl eines neuen Vektors der Gewichtungswert den zuletzt ausgewählten Vektor bevorzugt.

**3.** Verfahren nach Anspruch 1 oder 2, **dadurch gekennzeichnet**, daß der Gewichtungswert einen Null-Vektor in bezug auf andere Vektoren bevorzugt.

**4.** Verfahren nach Anspruch 1, 2 oder 3, **dadurch gekennzeichnet**, daß der Gewichtungswert die Vektoren entsprechend ihrer Länge bevorzugt.

**5.** Verfahren nach einem der Ansprüche 1 bis 4, **dadurch gekennzeichnet**, daß der Gewichtungswert Vektoren bevorzugt, die innerhalb eines bestimmten Bereichs angeordnet sind.

**6.** Verfahren nach einem der Ansprüche 1 bis 5, **dadurch gekennzeichnet**, daß der Gewichtungswert Vektoren bevorzugt, die in einer räumlichen Nachbarschaft auftreten.

**7.** Verfahren nach einem der Ansprüche 1 bis 6, **dadurch gekennzeichnet**, daß der Gewichtungswert Vektoren bevorzugt, die in einer zeitlichen Nachbarschaft auftreten.

## Revendications

**1.** Procédé de recherche de vecteurs de mouvement pour un signal vidéo, destiné à utiliser des vecteurs de mouvement dans des applications de traitement d'un signal vidéo, telles que la compression d'un signal vidéo, ledit procédé comprenant les étapes suivantes

calcul (23) de valeurs d'erreur représentant une erreur entre un bloc (10, 24) d'image en cours dans une image en cours et des blocs d'image de référence sélectionnés sur la base de chacun des candidats au vecteur de mouvement du bloc d'image en cours,
pondération (25) des valeurs d'erreur calculées, par des valeurs de pondération respectives,
sélection (27) de l'un des candidats au vecteur de mouvement conduisant à la plus faible valeur d'erreur pondérée, en tant que vecteur de mouvement pour le bloc (10, 24) d'image en cours, caractérisé par les étapes supplémentaires suivantes
détermination (26) de chacune des valeurs de pondération sur la base du candidat respectif au vecteur de mouvement et/ou du rapport entre le candidat respectif au vecteur de mouvement et des vecteurs de mouvement, s'il y en a, précédemment sélectionné à partir de son environnement, afin d'obtenir un champ vectoriel de mouvement plus homogène.

**2.** Procédé selon la revendication 1, caractérisé en ce que, lors de la sélection d'un nouveau vecteur, la valeur de pondération favorise le vecteur sélectionné en dernier.

**3.** Procédé selon la revendication 1 ou 2, caractérisé en ce que la valeur de pondération favorise un vecteur zéro par rapport à d'autres vecteurs.

**4.** Procédé selon la revendication 1, 2 ou 3, caractérisé en ce que la valeur de pondération favorise les vecteurs en fonction de leur longueur.

**5.** Procédé selon l'une quelconque des revendications 1 à 4, caractérisé en ce que la valeur de pondération favorise des vecteurs situés à l'intérieur d'une certaine zone.

**6.** Procédé selon l'une quelconque des revendications 1 à 5, caractérisé en ce que la valeur de pondération favorise des vecteurs apparaissant dans un environnement spatial.

**7.** Procédé selon l'une quelconque des revendications 1 à 6, caractérisé en ce que la valeur de pondération favorise des vecteurs apparaissant dans un environnement temporel.

## Block matching

-x_max

13

+x_max

Search area in a reference image

-y_max

12

12

10

Block to be matched
x-dim * y-dim

12

12

+y_max

12

## FIG. 1

EP 0 542 153 B1

FIG. 2

22 Image memory

21 Search for a block

Motion vector candidate

Block to be matched

24

23 Calculation of error

Motion vector candidate

26 Generation of weighting

25 Weighting of error

27 Comparison of error

Motion vector candidate

Selected motion vector